# EUROPÄISCHE PATENTSCHRIFT

(11) **EP 2 823 523 B1**
(45) Veröffentlichungstag und Bekanntmachung des Hinweises auf die Patenterteilung: **23.09.2015**
(21) Anmeldenummer: 13709036.1
(22) Anmeldetag: 14.02.2013
(51) Int. Cl.: H01M 2/20, H01R 43/02, H01R 43/28

(54) **BATTERIE MIT EINEM VERBINDUNGSELEMENT, BESTEHEND AUS EINER VIELZAHL VON EINZELDRÄHTEN**
BATTERY HAVING A CONNECTING ELEMENT COMPRISING MULTIPLE INDIVIDUAL WIRES
BATTERIE POSSÉDANT UN ÉLÉMENT DE CONNEXION COMPOSÉ D'UNE PLURALITÉ DE FILS MÉTALLIQUES INDIVIDUELS

(30) Priorität: 06.03.2012 DE 102012004532
(43) Veröffentlichungstag der Anmeldung: 14.01.2015
(73) Patentinhaber: Audi AG, 85045 Ingolstadt (DE)
(72) Erfinder: PAULESER, Thomas, 86529 Schrobenhausen (DE)
(74) Vertreter: Herbst, Matthias Heinz
(86) Internationale Anmeldenummer: PCT/EP2013/000427
(87) Internationale Veröffentlichungsnummer: WO 2013/131607

(56) Entgegenhaltungen:
- WO-A1-2010/142679
- DE-C1- 3 803 321

## Beschreibung

Die Erfindung betrifft eine Batterie mit einer Vielzahl von Batteriezellen und mit wenigstens einem Verbindungselement, welches einen elektrischen Pol einer ersten Batteriezelle mit den elektrischen Polen weiterer Batteriezellen verbindet. Das Verbindungselement umfasst eine Vielzahl von Einzeldrähten, welche in einem jeweiligen Anschlussbereich kompaktiert sind. Des Weiteren betrifft die Erfindung ein Verfahren zum Fertigen einer solchen Batterie.

In Elektrofahrzeugen und Hybridfahrzeugen werden heute elektrochemische Energiespeicher in Form von Batterien eingesetzt, welche häufig als Lithium-Ionen-Batterien ausgebildet sind. Um eine ausreichende Leistung und Kapazität der Batterien zu erreichen, werden hierbei eine Vielzahl von Batteriezellen seriell und parallel geschaltet. Die Batterie kann auch eine Mehrzahl von Batteriemodulen umfassen, in welchen wiederum eine Mehrzahl von Batteriezellen seriell und/oder parallel geschaltet angeordnet sind.

Das Verschalten oder elektrische Verbinden der Batteriezellen miteinander zu einem Batteriemodul oder einem Batteriesystem erfolgt in der Regel durch starre Stromschienen, welche aus Kupfer oder aus Aluminium gebildet sind. Diese Stromschienen werden mit den jeweiligen elektrischen Polen der Batteriezellen kraftschlüssig oder stoffschlüssig verbunden, sodass eine elektrisch leitende Verbindung hergestellt ist.

Die relative Position der Batteriezellen zueinander unterliegt jedoch fertigungsbedingt und montagebedingt gewissen Schwankungen. Um diese zu kompensieren, also einen Toleranzausgleich zu schaffen, werden konstruktive Maßnahmen getroffen. Dies kann aus verfahrenstechnischen Gründen notwendig sein, etwa wenn die Batteriezellen und die Stromschienen exakt relativ zueinander positioniert werden müssen, um eine elektrische Verbindung durch ein Schweißverfahren zu realisieren. Des Weiteren können durch einen Toleranzausgleich bereitstellende Maßnahmen, statische mechanische Belastungen wie beispielsweise Zugkräfte auf die elektrische Pole der Batteriezellen minimiert werden, welche ansonsten die Lebensdauer der Batteriezellen oder der Verbindung beeinträchtigen könnten.

Die US 3 706 955 A beschreibt ein elektrisches Kabel, welches aus einem flachen Blechstreifen hergestellt ist. Ein Bereich zwischen axialen Enden des Blechstreifens ist mit einer Vielzahl von Schlitzen versehen, sodass der Blechstreifen in diesem Bereich in eine Vielzahl von Einzeldrähten aufgelöst ist. Ein solches Kabel kann zum Anschließen an die Anschlüsse einer gewöhnlichen Autobatterie verwendet werden.

Die US 5 541 380 A beschreibt ein Kabel, welches eine Vielzahl einzelner Fasern umfasst, welche geflochten sind. In Endbereichen des Kabels sind die Fasern verfestigt, etwa durch Schweißen. Ein erstes Ende des Kabels kann mit einem Strom bereitstellenden Gerät und ein zweites Ende mit einem Strom empfangenden Gerät gekoppelt werden.

Die DE 27 45 189 A1 beschreibt einen Stromleiter zur Verbindung zwischen der Batterie und dem Anlasser von Verbrennungskraftmaschinen, welcher aus einem Bandmaterial hergestellt ist. Zwischen einem ersten Ende, in welchem durch Umlegen des Bandmaterials eine Lasche gebildet ist, und einem zweiten Ende, welches eine Batterieklemme bildet, sind eine Reihe von Längsschlitzen vorgesehen, sodass in diesem Bereich der Stromleiter in eine Vielzahl von Einzeldrähten zerteilt ist.

Aus dem Stand der Technik, etwa der DE 10 2007 063 177A1, ist es bekannt, zum Toleranzausgleich ein Ausgleichselement zwischen einen Zellverbinder in Form einer Stromschiene und den elektrischen Pol einzubringen, wobei das Ausgleichselement mit dem Zellverbinder einerseits und mit dem elektrischen Pol andererseits jeweils stoffschlüssig verbunden wird.

Dies hat den Nachteil, dass in Form des Ausgleichselements ein zusätzliches Bauteil erforderlich ist. Dadurch entsteht ein zusätzlicher Aufwand zur Herstellung, Lagerung, Bereitstellung und Montage, nämlich im Hinblick auf die Positionierung des Ausgleichselements an dem elektrischen Pol und dem Zellverbinder. Zusätzlich besteht die Gefahr eines Kurzschlusses, etwa wenn das Ausgleichselement herunterfällt.

Durch das Vorsehen der Ausgleichselemente erhöht sich zudem das Gewicht der Batterie. Darüber hinaus ist es nachteilig, dass hier jede Verbindungsstelle zwei Fügestellen aufweist, nämlich zwischen dem elektrischen Pol und dem Ausgleichselement einerseits und zwischen dem Ausgleichselement und dem Zellverbinder andererseits. Dies führt erfahrungsgemäß zu einer Erhöhung des elektrischen Gesamtwiderstands der Verbindung.

Das Vorsehen von Ausgleichselementen kann zwar statische Belastungen vermeiden. Jedoch hat die starre Verbindung der Batteriezellen zur Folge, dass Bewegungen der Batteriezellen relativ zueinander im Betrieb unmittelbar eine mechanische Spannung an den elektrischen Polen der Batteriezellen hervorrufen. Solche Relativbewegungen können insbesondere durch Wärmeausdehnung hervorgerufen werden, aber auch durch Beanspruchung des Batteriesystems auf Biegung oder Torsion im Fahrzeug.

Des Weiteren ist es etwa aus der DE 10 2009 058 723 A1 oder der EP 208 0232 A2 bekannt, zum Toleranzausgleich innerhalb der Stromschiene flexible Elemente vorzusehen. Dies führt jedoch zu einer Schwächung des Querschnitts der Stromschiene und damit zu erhöhten Widerständen und einer verringerten Strombelastbarkeit. Bei der WO 2011 045 088 A1 führt das Vorsehen von flexiblen Elementen innerhalb der Stromschiene zu einer Vergrößerung der Länge der Stromschiene und damit zu einem erhöhten Gewicht. Darüber hinaus ist die Flexibilität derartiger flexibler Konstruktionen häufig auf eine Raumrichtung beschränkt.

Des Weiteren ist es bekannt, anstatt einer starren Stromschiene zur Verbindung der Batteriezellen einen flexiblen Stromleiter in Form einer Litze zu verwenden. Hierbei wird die Litze in einem zur Anbindung an den elektrischen Pol der Batteriezelle vorgesehenen Bereich mit einer pressgeschweißten Hülse versehen und anschließend mit den Batteriepolen verschraubt. Hierbei ist der Umstand als nachteilig anzusehen, dass die Presshülsen zusätzliches Gewicht mit sich bringen und das Aufbringen der Presshülsen einen beträchtlichen Aufwand darstellt.

Die WO 2010/142679 A1 beschreibt einen Batteriezellenverbinder, bei welchem jeweilige Anschlussteile des Batteriezellenverbinders aus dem gleichen Material gebildet sind wie die elektrischen Pole der Batteriezellen, mit welchen die Anschlussteile stoffschlüssig verbunden werden sollen. Zwischen den Anschlussteilen ist ein Verbindungsteil vorgesehen, welches aus einer Litze oder einem Geflecht gebildet ist. Im Bereich der Anbindung dieser Litze an die Anschlussteile ist die Litze durch kurzzeitiges Verpressen und Erhitzen kompaktiert. Diese kompaktierten Bereiche sind stoffschlüssig mit dem jeweiligen Anschlussteil verbunden.

Als nachteilig ist hierbei der Umstand anzusehen, dass der Batteriezellenverbinder vergleichsweise komplex aufgebaut ist, da er sowohl die Anschlussteile als auch die Litze mit dem kompaktierten Endbereichen umfasst, welche die Anschlussteile elektrisch miteinander verbindet. Zudem ergeben sich sowohl zwischen den kompaktierten Bereichen der Litze und den Anschlussteilen einerseits als auch zwischen den Anschlussteilen und den elektrischen Polen der Batteriezellen Fügestellen, wodurch sich der Gesamtwiderstand der Verbindung erhöhen kann.

Aufgabe der vorliegenden Erfindung ist es, eine Batterie der eingangs genannten Art sowie ein Verfahren zum Fertigen einer solchen Batterie zu schaffen, mittels welcher bzw. mittels welchem ein besonders einfacher Aufbau realisiert ist.

Diese Aufgabe wird durch eine Batterie mit den Merkmalen des Patentanspruchs 1 und durch ein Verfahren mit den Merkmalen des Patentanspruchs 9 gelöst. Vorteilhafte Ausgestaltungen mit zweckmäßigen Weiterbildungen der Erfindung sind in den abhängigen Patentansprüchen angegeben.

Bei der erfindungsgemäßen Batterie ist das Verbindungselement in dem jeweiligen Anschlussbereich mit dem jeweiligen elektrischen Pol der Batteriezelle in Anlage. Die Einzeldrähte sind in regelmäßig voneinander beabstandeten Anschlussbereichen kompaktiert, und die Abstände der Anschlussbereiche entsprechen den Abständen der elektrischen Pole der Batteriezellen im Zellverbund der Batterie. Durch die Kompaktheit des Anschlussbereichs lässt sich dieser nämlich besonders gut unmittelbar mit dem elektrischen Pol der Batteriezelle verbinden, so wie dies bei einem Anschlussbereich einer insgesamt starren Stromschiene der Fall ist. Des Weiteren ist das Verbindungselement besonders einfach aufgebaut, wodurch sich der Aufbau der gesamten Batterie vereinfacht.

Bei der vorliegend beschriebenen Batterie sorgt zudem das in seinen nicht-kompaktierten Bereichen flexible Verbindungselement dafür, dass Toleranzen in alle Richtungen ohne weiteren Aufwand ausgeglichen werden. Sowohl die Anschlussbereiche als auch die elektrischen Pole der Batteriezelle bleiben dadurch während des Betriebs der Batterie weitgehend frei von mechanischen Spannungen. Die hohe Flexibilität des Verbindungselements in seinen nicht-kompaktierten Bereichen beruht auf der Vielzahl der dünnen Einzeldrähte, aus welchen das Verbindungselement aufgebaut ist.

Des Weiteren entsprechen die Eigenschaften der kompaktierten Anschlussbereiche im Wesentlichen denen einer massiven Stromschiene, sodass die Anschlussbereiche eine einfache und prozesssichere Anbindung des - weiterhin eine Flexibilität aufweisenden - Verbindungselements an den jeweiligen elektrischen Pol der Batteriezelle ermöglichen. Zudem liegt im Bereich der Anbindung des Verbindungselements an die elektrischen Pole aufgrund der kompaktierten Anschlussbereiche ein besonders geringer Übergangswiderstand vor.

Dadurch, dass die jeweiligen Anschlussbereiche direkt mit dem jeweiligen elektrischen Pol der Batteriezelle in Anlage sind, ist die Batterie einfach aufgebaut, und auch das Verbindungselement ist herstellungstechnisch besonders einfach bereitstellbar. Es braucht nämlich lediglich das Verbindungselement an definierten Stellen, nämlich in den jeweils zum Anschließen an die elektrischen Pole der Batteriezellen vorgesehenen Anschlussbereichen, kompaktiert zu werden, und diese kompaktierten Bereiche werden dann mit den elektrischen Polen der Batteriezelle verbunden.

In einer vorteilhaften Ausgestaltung der Erfindung ist das Verbindungselement in dem jeweiligen Anschlussbereich durch ein Verschweißen der Einzeldrähte kompaktiert. Die dadurch zusammengeschmolzenen Einzeldrähte stellen dann einen besonders kompakten, massiven Anschlussbereich bereit. Dies ist im Hinblick auf ein Erreichen eines niedrigen Übergangswiderstands der Verbindung zwischen dem Anschlussbereich und dem elektrischen Pol der Batteriezelle von Vorteil.

Um die Einzeldrähte randlich anzuschmelzen, kann insbesondere das Widerstandsschweißen zum Einsatz kommen, welches dann zur Ausbildung des kompakten Anschlussbereichs führt. So lässt sich ein besonders inniger Verbund der Einzeldrähte miteinander herstellen, welcher sehr gute elektrische Eigenschaften aufweist. Hierfür ist jedoch auch ein Pressschweißverfahren einsetzbar, beispielsweise Ultraschallschweißen, bei welchem die Einzeldrähte durch Reibung und Druck verschweißt werden. Das Ultraschallschweißen ist insbesondere dann günstig anwendbar, wenn die Einzeldrähte des Verbindungselements aus Aluminium gebildet sind.

Das Verbindungselement ist in dem jeweiligen Anschlussbereich im Wesentlichen quaderförmig ausgebildet, wobei eine ebene Kontaktfläche des Anschlussbereichs mit einer ebenen Kontaktfläche eines Sockelbereichs des elektrischen Pols in Anlage ist. Durch einen solchen Anschlussbereich mit rechteckigem Querschnitt lässt sich ein von den Abmessungen her besonders exakt definierter Anschlussbereich ausbilden, durch welchen eine einfache und prozesssichere Montage der Batterie erreichbar ist. Die miteinander korrespondierenden ebenen Kontaktflächen des Anschlussbereichs und des Sockelbereichs sorgen zudem für eine elektrisch besonders gut leitende Verbindung zwischen dem Verbindungselement und den elektrischen Polen der Batteriezellen.

Das Verbindungselement kann in dem jeweiligen Anschlussbereich eine Durchtrittsöffnung aufweisen, in welcher eine im Wesentlichen stiftförmige Komponente des jeweiligen elektrischen Pols aufgenommen ist. Dies erleichtert das Positionieren der Anschlussbereiche relativ zu den elektrischen Polen. Die Durchtrittsöffnung kann beispielsweise durch Herstellen einer Bohrung in dem Anschlussbereich ausgebildet werden.

Insbesondere kann das Verbindungselement in dem jeweiligen Anschlussbereich mit dem elektrischen Pol durch Verschrauben verbunden sein. Dadurch kann die Anpresskraft, mit welcher der Anschlussbereich mit dem jeweiligen elektrischen Pol der Batteriezelle in Anlage ist, besonders gut eingestellt werden. Ein solches Verschrauben des Anschlussbereichs mit dem elektrischen Pol bietet sich beispielsweise dann an, wenn eine stiftförmige Komponente des jeweiligen elektrischen Pols ein Schraubgewinde aufweist, auf welches eine Schraubenmutter aufgeschraubt werden kann.

Eine besonders innige Verbindung des Verbindungselements mit den elektrischen Polen lässt sich jedoch erreichen, wenn das Verbindungselement in dem jeweiligen Anschlussbereich mit dem elektrischen Pol stoffschlüssig verbunden ist. Durch das Vorsehen der kompaktierten Anschlussbereiche an mit den elektrischen Polen korrespondierenden Stellen des Verbindungselements lassen sich nämlich die stoffschlüssig zu fügenden Teile besonders exakt positionieren. Zudem ist durch das stoffschlüssige Verbinden eine besonders hohe und insbesondere gleichbleibend hohe Verbindungsqualität erreichbar. Insbesondere kann zum stoffschlüssigen Verbinden ein Strahlschweißverfahren, etwa Laserstrahlschweißen zum Einsatz kommen, welches eine sehr hohe Schweißgeschwindigkeit erlaubt.

Wenn in dem Anschlussbereich eine Durchtrittsöffnung vorgesehen ist, in welcher eine stiftförmige Komponente des jeweiligen elektrischen Pols aufgenommen ist, lässt sich eine stoffschlüssige Verbindung durch Herstellen von Stumpfnähten und/oder Kehlnähten beim Schweißen besonders einfach erreichen.

Zusätzlich oder alternativ kann das Verbindungselement in einem Überlappungsbereich mit dem elektrischen Pol verschweißt sein, in welchem der jeweilige Anschlussbereich mit einem Sockelbereich des elektrischen Pols in Anlage ist. Hierbei wird dann durch den kompaktierten Anschlussbereich hindurch in den Sockelbereich des elektrischen Pols hineingeschweißt. So lässt sich besonders gut die flächige Anlage des Anschlussbereichs an dem Sockelbereich ausnutzen, um einen sicheren Verbund zwischen dem Verbindungselement und den elektrischen Polen herzustellen. Die flächige Anlage kann während des Schweißprozesses mittels einer Spannvorrichtung sichergestellt werden.

Das Verbindungselement kann aus einem Gewebeband oder einer Litze gebildet sein, wobei insbesondere eine Flachlitze zum Einsatz kommen kann. Derartige Gewebebänder oder Litzen lassen sich nämlich besonders einfach in den hierfür vorgesehenen Bereichen kompaktieren.

Die Einzeldrähte des Verbindungselements sind vorzugsweise aus Kupfer oder Aluminium gebildet, um eine elektrisch gut leitende Verbindung zu den elektrischen Polen der Batteriezellen zu erreichen.

Bei dem erfindungsgemäßen Verfahren zum Fertigen einer wenigstens zwei Batteriezellen aufweisenden Batterie, welche insbesondere für ein Fahrzeug vorgesehen ist, werden Einzeldrähte eines eine Vielzahl von Einzeldrähten umfassenden Verbindungselements in einem jeweiligen Anschlussbereich kompaktiert. Zumindest ein elektrischer Pol einer ersten Batteriezelle wird mit einem elektrischen Pol wenigstens einer weiteren Batteriezelle der Batterie mittels des Verbindungselements verbunden. Hierbei wird zum elektrischen Verbinden der Pole miteinander das Verbindungselement in dem jeweiligen Anschlussbereich mit dem jeweiligen elektrischen Pol der Batteriezelle in Anlage gebracht. Die Einzeldrähte werden in regelmäßig voneinander beabstandeten Anschlussbereichen kompaktiert, wobei die Abstände der Anschlussbereiche den Abständen der elektrischen Pole der Batteriezellen im Zellverbund der Batterie entsprechen. Durch diese unmittelbare Kontaktierung der elektrischen Pole der Batteriezelle mit dem kompaktierten Anschlussbereich des Verbindungselements lässt sich ein besonders einfacher Aufbau der Batterie realisieren, und zugleich liegt im Bereich der Verbindung des Verbindungselements mit den elektrischen Polen ein günstiger, niedriger Übergangswiderstand vor.

Die für die erfindungsgemäße Batterie beschriebenen Vorteile und bevorzugten Ausführungsformen gelten auch für das erfindungsgemäße Verfahren und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisch eine Batterie mit einer Mehrzahl von Batteriezellen, bei welcher die elektrischen Pole mittels eines Zellverbinders in Form einer flexiblen Flachlitze miteinander verbunden sind, welche in jeweiligen Anschlussbereichen an die elektrischen Pole kompaktiert ist;
- Fig. 2: beispielhaft ein Gewebeband, welches als Ausgangsmaterial zur Herstellung eines Zellverbinders geeignet ist, wie er in Fig. 1 gezeigt ist; und
- Fig. 3: eine Rundlitze mit einem durch Schweißen kompaktierten Anschlussbereich zur Anbindung desselben an den elektrischen Pol einer Batteriezelle gemäß Fig. 1.

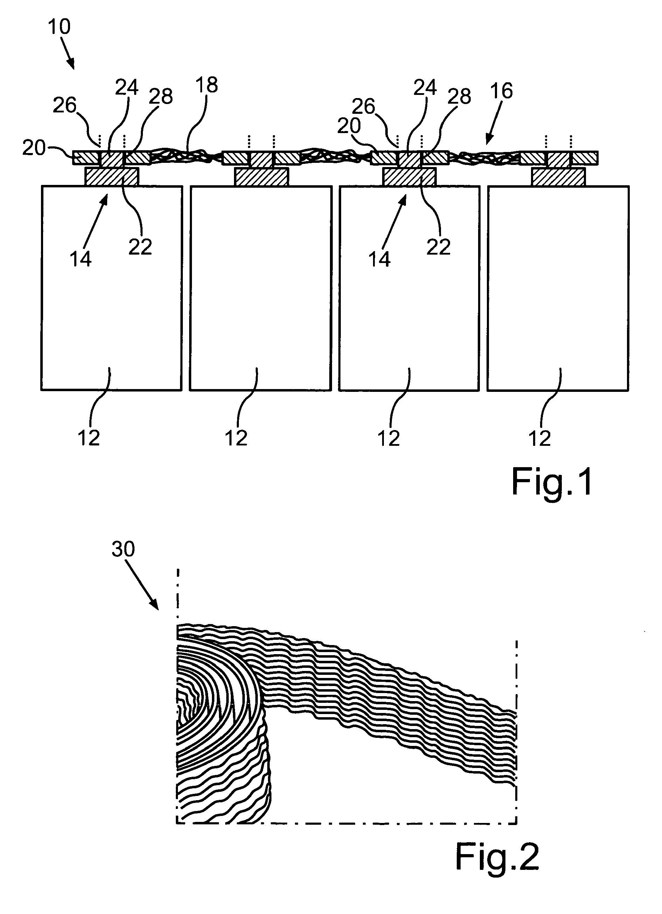

Fig. 1 zeigt schematisch eine Batterie 10, welche als Traktionsbatterie in einem Elektrofahrzeug oder Hybridfahrzeug zum Einsatz kommen kann. Die Batterie 10 umfasst eine Mehrzahl von Batteriezellen 12, die insbesondere als Lithium-Ionen-Zellen ausgebildet sein können. Elektrische Pole 14 der jeweiligen Batteriezellen 12 sind mittels eines Verbindungselements in Form einer Flachlitze 16 elektrisch miteinander verbunden. Die Flachlitze 16 weist eine Vielzahl von Einzeldrähten 18 auf, welche aufgrund ihrer Flexibilität Abweichungen einer Ist-Lage der Batteriezellen 12 von einer Soll-Lage in allen Raumrichtungen ausgleichen können.

In regelmäßig voneinander beabstandeten Anschlussbereichen 20 sind die Einzeldrähte 18 der Flachlitze 16 kompaktiert, also zu einer massiven Einheit verbunden. Die Abstände entsprechen hierbei den Abständen der elektrischen Pole 14 der Batteriezellen 12 im Zellverbund der Batterie 10. Vorliegend ist die Flachlitze 16 in den Anschlussbereichen 20 durch Widerstandsschweißen kompaktiert, welches zu einem randlichen Anschmelzen und Sich-Verbinden der Einzeldrähte 18 der Flachlitze 16 führt.

In diesen Anschlussbereichen 20 erfolgt die Verbindung der Flachlitze 16 mit den elektrischen Polen 14 der Batteriezellen 12. Durch die zwischen den kompaktierten Anschlussbereichen 20 vorgesehenen Bereiche mit den flexiblen Einzeldrähten 18 bleiben sowohl die Verbindungsstellen der Anschlussbereiche 20 mit den elektrischen Pole 14 als auch die elektrischen Pole 14 selbst während des Betriebs der Batterie 10 weitgehend frei von mechanischen Spannungen.

In den kompaktierten Anschlussbereichen 20 weist die Flachlitze 16 Eigenschaften auf, wie sie eine massive, starre Stromschiene hat. Entsprechend kann die Flachlitze 16 in diesen kompaktierten Anschlussbereichen 20 so wie eine massive Stromschiene mit den elektrischen Polen 14 verbunden werden.

Vorliegend umfasst der jeweilige elektrische Pol 14 einen Sockel 22 und einen aus dem Sockel 22 hervortretenden Stift oder Bolzen 24. Wenn eine Verbindung der Flachlitze 16 mit den elektrischen Polen 14 durch Verschrauben vorgesehen ist, so kann dieser Bolzen 24 als Gewindebolzen ausgebildet sein.

Vorliegend ist der Bolzen 24 in eine Bohrung eingeführt, welche im kompaktierten Anschlussbereich 20 der Flachlitze 16 ausgebildet ist. Im Anschluss an dieses Einführen des Bolzens 24 in die in dem jeweiligen Anschlussbereich 20 vorgesehene Bohrung erfolgt zur Herstellung der in Fig. 1 gezeigten Batterie 10 die Verbindung des Anschlussbereichs 20 mit dem jeweiligen elektrischen Pol 14 durch Verschweißen, insbesondere durch Laserstrahlschweißen. Entsprechende Laserstrahlen 26 sind in Fig. 1 schematisch angedeutet. Durch das Laserstrahlschweißen wird der Bolzen 24 über eine in dem Anschlussbereich 20 umlaufende Stumpfnaht 28 mit der Flachlitze 16 stoffschlüssig verbunden.

Zudem ist eine ebene, flache Unterseite des Anschlussbereichs 20 mit einer ebenen, flachen Oberseite des Sockels 22 in Anlage. In alternativen Ausführungsformen kann auch in diesen Bereichen, in welchen der Anschlussbereich 20 und der Sockel 22 miteinander überlappen durch den kompaktierten Anschlussbereich 20 hindurch in den Sockel 22 hineingeschweißt werden, um eine entsprechende stoffschlüssige Anbindung der Flachlitze 16 an die elektrischen Pole 14 der Batteriezellen 12 zu erreichen.

Anstelle der Flachlitze 16 kann als Ausgangsmaterial für die Herstellung des Verbindungselements zum Verbinden der elektrischen Pole 14 auch ein Gewebeband 30 herangezogen werden, welches beispielhaft in Fig. 2 gezeigt ist. Ein solches Gewebeband 30 kann - ebenso wie die Flachlitze 16 - insbesondere aus Kupfer oder Aluminium bestehen. Durch Schweißen, insbesondere durch Widerstandsschweißen, werden in diesem Gewebeband 30 an den für die Kontaktierung der elektrischen Pole 14 vorgesehenen Stellen kompaktierte Anschlussbereiche 20 geschaffen und anschließend wird das Gewebeband 30 in den kompaktierten Anschlussbereichen 20 mit den elektrischen Polen 14 verbunden. Hierfür haben sich insbesondere Strahlschweißverfahren als vielversprechend erwiesen, da die zu fügenden Teile besonders exakt positioniert werden können.

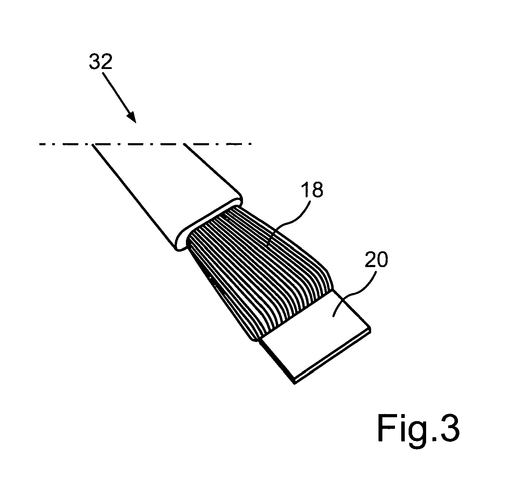

Fig. 3 zeigt als alternatives Ausgangsmaterial für ein Verbindungselement zum elektrischen Verbinden der elektrischen Pole 14 der Batteriezellen 12 eine Rundlitze 32. Auch bei dieser Rundlitze 32 sind die Einzeldrähte 18 in dem Anschlussbereich 20 kompaktiert.

Insbesondere aus dieser Ansicht in Fig. 3 geht besonders gut hervor, dass die Litze in dem Anschlussbereich 20 quaderförmig ausgebildet ist, also einen rechteckigen Querschnitt mit exakten Abmessungen aufweist. So wird durch das Kompaktieren eine ebene, gleichförmige Oberfläche in dem Anschlussbereich 20 bereitgestellt, welche anschließend gut mit dem elektrischen Pol 14 der jeweiligen Batteriezelle 12 in Anlage gebracht werden kann.

Die tatsächliche Verbindung des Anschlussbereichs 20 mit dem jeweiligen elektrischen Pol 14 der Batteriezelle kann dann durch Verschrauben oder, wie vorstehend beschrieben, durch Schweißen erfolgen.

## Patentansprüche

1. Batterie, insbesondere für ein Fahrzeug, mit einer Vielzahl von Batteriezellen (12) und mit wenigstens einem Verbindungselement (16), welches einen elektrischen Pol (14) einer ersten Batteriezelle (12) mit den elektrischen Polen (14) weiterer Batteriezellen (12) verbindet, wobei das Verbindungselement (16) eine Vielzahl von Einzeldrähten (18) umfasst, welche in einem jeweiligen Anschlussbereich (20) kompaktiert sind,
**dadurch gekennzeichnet, dass**
das Verbindungselement (16) in dem jeweiligen Anschlussbereich (20) mit dem jeweiligen elektrischen Pol (14) der Batteriezelle (12) in Anlage gebracht ist, wobei die Einzeldrähte (18) in regelmäßig voneinander beabstandeten Anschlussbereichen (20) kompaktiert sind und die Abstände der Anschlussbereiche (20) den Abständen der elektrischen Pole (14) der Batteriezellen (12) im Zellverbund der Batterie (10) entsprechen,
wobei das Verbindungselement (16) in dem jeweiligen Anschlussbereich (20) quaderförmig ausgebildet ist, und wobei eine ebene Kontaktfläche des Anschlussbereichs (20) mit einer ebenen Kontaktfläche eines Sockelbereichs (22) des elektrischen Pols (14) in Anlage gebracht ist.

2. Batterie nach Anspruch 1,
**dadurch gekennzeichnet, dass**
das Verbindungselement (16) in dem jeweiligen Anschlussbereich (20) durch ein Verschweißen der Einzeldrähte (18) kompaktiert ist.

3. Batterie nach Anspruch 1 oder 2,
**dadurch gekennzeichnet, dass**
das Verbindungselement (16) in dem jeweiligen Anschlussbereich (20) eine Durchtrittsöffnung aufweist, in welcher eine stiftförmige Komponente (24) des jeweiligen elektrischen Pols (14) aufgenommen ist.

4. Batterie nach einem der Ansprüche 1 bis 3,
**dadurch gekennzeichnet, dass**
das Verbindungselement (16) in dem jeweiligen Anschlussbereich (20) mit dem elektrischen Pol (14) durch Verschrauben verbunden ist.

5. Batterie nach einem der Ansprüche 1 bis 4,
**dadurch gekennzeichnet, dass**
das Verbindungselement (16) in dem jeweiligen Anschlussbereich (20) mit dem elektrischen Pol (14) stoffschlüssig, insbesondere mittels eines Strahlschweißverfahrens, verbunden ist.

6. Batterie nach einem der Ansprüche 1 bis 5,
**dadurch gekennzeichnet, dass**
das Verbindungselement (16) in einem Überlappungsbereich mit dem elektrischen Pol (14) verschweißt ist, in welchem der jeweilige Anschlussbereich (20) mit dem Sockelbereich (22) des elektrischen Pols (14) in Anlage gebracht ist.

7. Batterie nach einem der Ansprüche 1 bis 6,
**dadurch gekennzeichnet, dass**
das Verbindungselement aus einem Gewebeband (30) oder einer Litze (32), insbesondere aus einer Flachlitze (16), gebildet ist.

8. Batterie nach einem der Ansprüche 1 bis 7,
**dadurch gekennzeichnet, dass**
die Einzeldrähte (18) des Verbindungselements (16) aus Kupfer oder aus Aluminium gebildet sind.

9. Verfahren zum Fertigen einer insbesondere für ein Fahrzeug vorgesehenen Batterie (10) mit einer Vielzahl von Batteriezellen (12), bei welchem Einzeldrähte (18) eines eine Vielzahl von Einzeldrähten (18) umfassenden Verbindungselements (16) in einem jeweiligen Anschlussbereich (20) kompaktiert werden, wobei das Verbindungselement (16) in dem jeweiligen Anschlussbereich (20) derart quaderförmig ausgebildet wird, dass es eine ebene Kontaktfläche aufweist, und bei welchem ein elektrischer Pol (14) einer ersten Batteriezelle (12) mit den elektrischen Polen (14) weiterer Batteriezellen (12) mittels des Verbindungselements (16) verbunden wird,
**dadurch gekennzeichnet, dass**
zum elektrischen Verbinden der Pole (14) miteinander die ebene Kontaktfläche des Anschlussbereichs (20) mit einer ebenen Kontaktfläche eines Sockelbereichs (22) des jeweiligen elektrischen Pols (14) der Batteriezelle (12) in Anlage gebracht wird, wobei die Einzeldrähte (18) in regelmäßig voneinander beabstandeten Anschlussbereichen (20) kompaktiert werden und die Abstände der Anschlussbereiche (20) den Abständen der elektrischen Pole (14) der Batteriezellen (12) im Zellverbund der Batterie (10) entsprechen.

## Claims

1. Battery, particularly for a vehicle, having a plurality of battery cells (12) and at least one connecting element (16) which connects an electric pole (14) of a first battery cell (12) to the electric poles (14) of further battery cells (12), the connecting element (16) comprising a plurality of individual wires (18) which are compacted in a respective attachment zone (20),
**characterised in that**
the connecting element (16) in the respective attachment zone (20) is in contact with the respective electric pole (14) of the battery cell (12), wherein the individual wires (18) are compacted in evenly spaced-apart attachment zones (20) and the distances between the attachment regions (20) correspond to the distances between the electric poles (14) of the battery cells (12) in the set of cells of the battery (10),
wherein the connecting element (16) in the respective attachment zone (20) is of cuboid configuration, and a flat contact surface of the attachment zone (20) is in contact with a flat contact surface of a base portion (22) of the electric pole (14).

2. Battery according to claim 1,
**characterised in that**
the connecting element (16) is compacted in the respective attachment zone (20) by welding the individual wires (18).

3. Battery according to claim 1 or 2,
**characterised in that**
the connecting element (16) comprises in the respective attachment zone (20) a through-opening in which a pin-shaped component (24) of the respective electric pole (14) is accommodated.

4. Battery according to one of claims 1 to 3,
**characterised in that**
the connecting element (16) is connected to the electric pole (14) in the respective attachment zone (20) by screwing.

5. Battery according to one of claims 1 to 4,
**characterised in that**
the connecting element (16) is connected to the electric pole (14) in the respective attachment zone (20) by a material joint, particularly by means of a beam welding process.

6. Battery according to one of claims 1 to 5,
**characterised in that**
the connecting element (16) is welded to the electric pole (14) in an overlap zone in which the respective attachment zone (20) is in contact with the base portion (22) of the electric pole (14).

7. Battery according to one of claims 1 to 6,
**characterised in that**
the connecting element is formed from a braided strip (30) or a litz wire (32), particularly a flat litz wire (16).

8. Battery according to one of claims 1 to 7,
**characterised in that**
the individual wires (18) of the connecting element (16) are formed from copper or aluminium.

9. Method for manufacturing a battery (10), intended particularly for a vehicle, having a plurality of battery cells (12), wherein individual wires (18) of a connecting element (16) comprising a plurality of individual wires (18) are compacted in a respective attachment zone (20), the connecting element (16) in the respective attachment zone (20) being of cuboid configuration such that it comprises a flat contact surface, and wherein an electric pole (14) of a first battery cell (12) is connected to the electric poles (14) of further battery cells (12) by means of the connecting element (16),
**characterised in that**
for electrically connecting the poles (14) to one another, the flat contact surface of the attachment zone (20) is brought into contact with a flat contact surface of a base portion (22) of the respective electric pole (14) of the battery cell (12), the individual wires (18) being compacted in evenly spaced-apart attachment zones (20) and the distances between the attachment zones (20) corresponding to the distances between the electric poles (14) of the battery cells (12) in the set of cells of the battery (10).

## Revendications

1. Batterie, en particulier pour un véhicule, comprenant une pluralité d'éléments de batterie (12) et au moins un élément de connexion (16) qui connecte un pôle électrique (14) d'un premier élément de batterie (12) aux pôles électriques (14) d'autres éléments de batterie (12), dans laquelle l'élément de connexion (16) comprend une pluralité de fils métalliques individuels (18), qui sont compactés dans une zone de connexion respective (20),
**caractérisée en ce que** :
l'élément de connexion (16) est amené, dans la zone de connexion respective (20), en contact avec le pôle électrique respectif (14) de l'élément de batterie (12), dans laquelle les fils métalliques individuels (18) sont compactés dans des zones de connexion (20) régulièrement espacées l'une de l'autre et les espacements des zones de connexion (20) correspondent aux espacements des pôles électriques (14) des éléments de batterie (12) une fois les éléments assemblés dans la batterie (10),
dans laquelle l'élément de connexion (16) est conformé en parallélépipède dans la zone de connexion respective (20) et dans laquelle une surface de contact plane de la zone de connexion (20) est amenée en contact avec une surface de contact plane d'une zone de culots (22) du pôle électrique (14).

2. Batterie selon la revendication 1,
**caractérisée en ce que** :
l'élément de connexion (16) est compacté dans la zone de connexion respective (20) par un soudage des fils métalliques individuels (18).

3. Batterie selon la revendication 1 ou la revendication 2,
**caractérisée en ce que** :
l'élément de connexion (16) présente dans la zone de connexion respective (20) une ouverture de passage dans laquelle un composant en forme de tige (24) du pôle électrique respectif (14) est reçu.

4. Batterie selon l'une quelconque des revendications 1 à 3,
**caractérisée en ce que** :
l'élément de connexion (16) est connecté au pôle électrique (14) dans la zone de connexion respective (20) par vissage.

5. Batterie selon l'une quelconque des revendications 1 à 4,
**caractérisée en ce que** :
l'élément de connexion (16) est connecté au pôle électrique (14) dans la zone de connexion respective (20) d'un seul tenant, en particulier au moyen d'un procédé de soudage par rayonnement.

6. Batterie selon l'une quelconque des revendications 1 à 5,
**caractérisée en ce que** :
l'élément de connexion (16) est soudé dans une zone de chevauchement au pôle électrique (14), dans lequel la zone de connexion respective (20) est amenée en contact avec la zone de culots (22) du pôle électrique (14).

7. Batterie selon l'une quelconque des revendications 1 à 6,
**caractérisée en ce que** :
l'élément de connexion est constitué d'une bande de tissu (30) ou d'un cordon (32), en particulier d'un cordon plat (16).

8. Batterie selon l'une quelconque des revendications 1 à 7,
**caractérisée en ce que** :
les fils métalliques individuels (18) de l'élément de connexion (16) sont formés de cuivre ou d'aluminium.

9. Procédé de fabrication d'une batterie (10) prévue en particulier pour un véhicule avec une pluralité d'éléments de batterie (12), dans lequel des fils métalliques individuels (18) d'un élément de connexion (16) comprenant une pluralité de fils métalliques individuels (18) sont compactés dans une zone de connexion respective (20), dans lequel l'élément de connexion (16) est conformé dans la zone de connexion respective (20) en parallélépipède de sorte qu'il présente une surface de contact plane, et dans lequel un pôle électrique (14) d'un premier élément de batterie (12) est connecté aux pôles électriques (14) d'autres éléments de batterie (12) au moyen de l'élément de connexion (16),
**caractérisé en ce que** :
pour connecter électriquement les pôles (14) l'un avec l'autre, la surface de contact plane de la zone de connexion (20) est amenée en contact avec une surface de contact plane d'une zone de culots (22) du pôle électrique respectif (14) de l'élément de batterie (12), dans lequel les fils métalliques individuels (18) sont compactés dans des zones de connexion (20) espacées régulièrement l'une de l'autre et les espacements des zones de connexion correspondent aux espacements des pôles électriques (14) des éléments de batterie (12) une fois les éléments assemblés dans la batterie (10).
